(19) Europäisches Patentamt
European Patent Office
Office européen des brevets

(11) EP 1 762 718 B1

(12) **EUROPEAN PATENT SPECIFICATION**

(45) Date of publication and mention
of the grant of the patent:
**28.04.2010 Bulletin 2010/17**

(51) Int Cl.:
***F02D 41/02*** (2006.01)

(21) Application number: **05257435.7**

(22) Date of filing: **02.12.2005**

(54) **Process for regeneration of a particulate filter**

Verfahren zur Regeneration eines Partikelfilters

Procédé de régénération d'un filtre à particules

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.09.2005 GB 0518421**

(43) Date of publication of application:
**14.03.2007 Bulletin 2007/11**

(73) Proprietor: **Delphi Technologies Holding S.à.r.l.**
**4940 Bascharage (LU)**

(72) Inventors:
• **Broyer, Valery D.**
**8077 Luxembourg (LU)**

• **Lioult, Alexandre**
**22 Arlon 6700 (LU)**

(74) Representative: **Gregory, John David Charles**
**Delphi Diesel Systems**
**Patent Department**
**Courteney Road**
**Gillingham**
**Kent ME8 0RU (GB)**

(56) References cited:
**EP-A- 1 375 877        EP-A- 1 544 432**
**EP-A1- 1 437 493       WO-A-2004/076827**
**DE-C1- 10 033 158      US-B1- 6 253 543**

**Description**

The present invention relates to an improved process for regenerating a particulate filter in the exhaust system of a compression ignition internal combustion engine and, more particularly, to a process for determining the amount of ash present in a particulate filter in the exhaust system of an internal combustion engine following a regeneration process.

Diesel engines are frequently fitted with particulate filters in the exhaust system thereof due to the demands of emission legislation as disclosed in EP 1605143 A. Such filters are usually mounted in the exhaust system downstream of a catalytic device such as an oxidation catalyst and other exhaust components, such as a turbocharger.

In order to avoid blockage of the particulate filter by accumulated soot, leading to an increase in exhaust backpressure, and ultimately a breakdown of the filter, particulate filters require periodic regeneration. During regeneration the temperature of the filter is increased so that the accumulated soot is burnt off, thereby ensuring both acceptable back pressure levels and the avoidance of filter overload.

This periodic regeneration process requires the temperature of the particulate filter to be greatly elevated. The temperature of the particulate filter must be raised to around 600°C in order to burn off the soot, compared to a normal exhaust operating temperature of 150°C. In a known regeneration process extra fuel is injected late in the injection cycle such that unburnt fuel combusts in a catalytic device in the exhaust upstream of the particulate filter in order to achieve the required elevated temperature of the particulate filter.

The regeneration of the particulate filter is triggered by soot mass parameters. The soot mass is determined from a measurement of the pressure drop over the filter due to the presence of soot. This pressure drop is equal to the difference in pressure measured between the oxidation catalyst inlet and the filter outlet, and the pressure drop across the filter when free of soot:

$$\Delta P_{sensor} = \Delta P_{soot} + \Delta P_{clean\ filter}$$

Erroneous estimation of the soot mass in the filter can lead to incorrect timing of the start and finish of a regeneration process. The filter can therefore accumulate soot, become overloaded and even fail.

Accurate soot mass estimation requires accurate values of all relevant parameters. The pressure drop across the filter free of soot is one of them. The physical equation calculating the pressure drop of a clean new filter is characterized during the calibration process. Nevertheless, the filter accumulates ash over the vehicle mileage. The clean filter equation is modified by a coefficient, hereinafter referred to as the ash coefficient, taking into account this accumulation. An ash learning algorithm estimates this ash coefficient during the vehicle life. The ash coefficient is updated during the life of the vehicle to take account of accumulated ash in the filter by carrying out the ash learning algorithm at regular intervals, for example based upon the distance travelled by the vehicle (i.e. the mileage of the vehicle).

The ash learning algorithm consists in measuring, during a predetermined time interval, the pressure drop across the particulate filter at the end of a regeneration process. At this moment, the filter is supposed to be free of soot. The difference between this measured pressure drop and the pressure drop for a clean new filter is proportional to the amount of accumulated ash present after regeneration.

$$\Delta P_{clean\ filter} = \Delta P_{clean\ new\ filter} + \Delta P_{ashes}$$

The ash coefficient is therefore calculated by the ash learning algorithm based upon this difference. The difficulty lies in getting an accurate coefficient and reproducible over the ash learning algorithm applications.

According to the present invention there is provided a process for regenerating a particulate filter in an exhaust system of a compression ignition internal combustion engine, the process comprising the steps of initiating a regeneration process by adjusting engine operating parameters to increase the temperature of the particulate filter to a regeneration temperature, carrying out a regeneration process for a first time period to burn off soot collected in the filter, determining whether or not the regeneration process proceeded under favourable filter regeneration conditions during said first time period, wherein the determination of whether or not the regeneration process proceeded under favourable conditions during the first period is based upon the determination of the exhaust gas temperature and/or the exhaust gas flow rate during the respective time period and the comparison of said determined values with predetermined values indicative of favourable regeneration conditions, and extending only the filter regeneration for a further time period if it is determined that the regeneration process proceeded under favourable filter regeneration conditions during said first time period to make sure that the filter is really free of soot, and subsequently performing an ash learning algorithm to determine an ash related coefficient only if it is determined that the regeneration process proceeded under the favourable filter regeneration conditions during said further time period, wherein the determination of whether or not the regeneration process proceeded under favourable conditions during the further time period is based upon the determination of the exhaust gas temperature and/or the exhaust gas flow rate during the respective time period and the comparison of said determined values with predetermined values indicative of favourable regeneration conditions.

In a preferred embodiment the process of determination of whether or not the regeneration process proceeded under favourable conditions during the first time period comprises at least one of:-

i) measuring the exhaust gas temperature and the exhaust gas flow rate over the respective regeneration period, calculating the mean exhaust gas temperature over said period and evaluating whether such calculated mean temperature exceeds a predetermined minimum temperature required for efficient soot combustion;
ii) determining the mean exhaust gas flow rate over the respective regeneration period and evaluating whether such calculated mean flow rate exceeds a predetermined minimum required for homogeneous soot combustion;
iii) determining the percentage of time over the respective regeneration period the exhaust gas temperature exceeds a predetermined maximum level indicative of non-homogenous soot combustion and comparing said calculated percentage with a predetermined maximum value;
iv) determining the percentage of time over the respective regeneration period the exhaust gas temperature falls below a predetermined minimum level indicative of inefficient soot combustion and comparing said calculated percentage with a predetermined maximum value.

Preferably the exhaust gas temperature is measured at the inlet of the particulate filter.
The process of determination of whether or not the regeneration process proceeded under favourable conditions during the second time period and thus whether or not an ash learning algorithm can take place may comprise at least one of:-

i) determining the exhaust gas flow rate and evaluating whether such flow rate falls within predetermined limits outside of which the ash learning algorithm lacks accuracy;
ii) determining the pressure drop over the filter during the second regeneration period and evaluating whether such pressure drop exceeds a predetermined limit above which transients are known to occur;
iii) evaluating whether the vehicle speed falls below a predetermined minimum below which transients are more likely to occur.

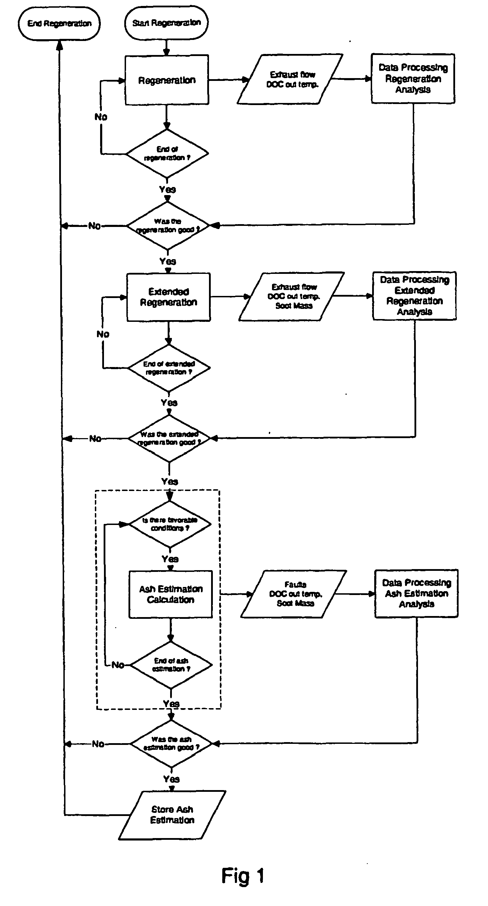

Preferably the regeneration process comprises the further step of recording the exhaust gas temperature during said ash learning algorithm, and updating the ash related coefficient with the value calculated by the ash learning algorithm only when the percentage of time over the period of the ash learning algorithm for which the exhaust gas temperature exceeds a predetermined maximum level and/or is below a predetermined minimum level falls below a predetermined maximum value.
A preferred embodiment of the present invention is illustrated in Fig. 1 and described as follows.
The process takes place in two steps. First analyses are performed before the ash learning algorithm execution. This ensures the filter is in an optimum condition for the ash learning algorithm execution. Secondly, the algorithm is not carried out if the input parameters are not in a "favourable range" at the end of a regeneration process to ensure an accurate calculation of the ash related coefficient. In parallel, the filter is monitored ensuring that the algorithm is still working under favourable conditions.
Once the conditions to start a regeneration are reached, a filter regeneration process is initiated. In a first step, the diesel oxidation catalyst (DOC) is heated-up, usually by modifying engine operating parameters, until it reaches its light-off temperature. In a second step, the temperature of the exhaust gases at the exit of the DOC is significantly increased to burn the soot collected in the particulate filter.
During the second step, the system is monitored. The purpose is to estimate the efficiency of the regeneration. The exhaust gas flow rate and the DOC outlet temperature are determined. As the soot burning is efficient only at high temperature, the data processing starts only once the DOC outlet temperature has exceeded a minimum value. Once the data processing has started, it is stopped only at the end of the regeneration.
The quality of the regeneration process is defined by four computed parameters:

1. The mean exhaust gas flow rate during the regeneration: a high exhaust gas flow rate mean during the regeneration leads to a better temperature distribution over the filter and then a more homogenous combustion. If the combustion is not homogenous the pressure drop across the filter is higher which can give erroneous values of the pressure drop due to ash accumulation at the end of the regeneration process.

2. The mean DOC outlet temperature during the regeneration: the average DOC outlet temperature must be high enough to ensure efficient soot burning.

3. The DOC-outlet-temperature-too-high percentage: this corresponds to the percentage of time passed in regeneration with a too high DOC outlet temperature. A too high temperature can generate a non homogenous soot combustion by concentrating the burning on the filter centre.

4. The DOC-outlet-temperature-too-low percentage: this corresponds to the percentage of time passed in regeneration with a too low DOC outlet temperature. A too low temperature doesn't allow burning soot efficiently.

When the regeneration process ends, if the four conditions are fulfilled, the regeneration is extended for a predetermined time period.

Extended Regeneration

The regeneration is extended to make sure that the filter is really free of soot. During that time, the same parameters as previously are monitored. This ensures an efficient extended regeneration. As this extended regeneration occurs just before applying the ash learning algorithm, it is advantageous to minimise the amount of remaining soot as much as possible. For that, the estimated soot mass based on the delta pressure acquisition must not exceed a threshold during a certain amount of time.

If the extended regeneration monitoring is satisfactory, the ash learning algorithm can start. The regeneration is still active during that stage.

Ash Learning Algorithm

As stated above, this is normally carried out at regular intervals during operation of a vehicle, usually based on vehicle mileage, to take account of the gradual accumulation of ash in the filter.

The ash learning algorithm is carried out as follows:-

In order to estimate the mass of soot accumulated in the filter from the measured pressure drop across the filter, it is necessary to estimate the pressure drop due to the filter itself (pressure drop of a soot free filter). To do so, we are using a clean filter model that is:

$$\Delta P_{clean} = a_1 \mu Q_{vol} + a_2 \rho Q_{vol}{}^2$$

$$\begin{cases} a_1 = \dfrac{1}{2\pi R^2}(\alpha + w_s)^2 \left( \dfrac{w_s}{k_w L \alpha} + \dfrac{8FL}{3\alpha^4} \right) \\ a_2 = \dfrac{(\alpha + w_s)^4}{(\pi R^2)^2 \alpha^2} \left[ \dfrac{\beta w_s}{4L^2} + 2\zeta \left( \dfrac{1}{\alpha} \right)^2 \right] \end{cases}$$

with:

$R =$   Filterradius
$\alpha =$   honeycombfiltercellsize
$w =_s$   filter wall thickness
$k_w =$   filter wall permeability
$L =$   effectivefilterchannellength
$\beta =$   Forchheime coefficient in porouswall
$\zeta =$   contraction/expension inertiallossescoefficient
$F =$   factorequalto 28.454

During the life of the filter, with the accumulation of the ash in the filter material, the coefficient of this model will change. It is therefore necessary to regularly update those coefficients. Normally, those coefficients are calculated using at least square method (offline processing of data recorded on the vehicle). Unfortunately, this method is too heavy to be implemented in an ECU.

Moreover, the identification of the coefficients can not be done at any time, but only when the filter is fully regenerated.

In order to be able to implement an easy and efficient identification procedure in the ECU the following simplification have been realised:

- Coefficient a2 is not much modified with ash accumulation. Indeed, this coefficient is mainly for pressure losses due to contraction and expansion at the inlet and outlet of the filtration channels of the filter material (the Forchheimer effect being negligible compare to the inertial losses). Therefore, as ash accumulation has no impact on the filtration channel's hydraulic diameter (ashes are accumulated at the inlet of the channels), the coefficient a2 stays pretty much constant.

- Moreover, the model sensitivity on coefficient a2 is fairly low compared to coefficient a1.

As a result, coefficient a2 can be identified for a new filter (without ashes) and kept constant. Only coefficient a1 has then to be regularly updated to correct for ash accumulation. During the ash learning algorithm, the coefficient that must be applied to a1 to correct for ash accumulation is calculated. The ash related coefficient $\Delta a1$ is calculated at the end of the filter regeneration with the following equation:

$$\Delta a_1 = \frac{\Delta P - \Delta P_{clean}}{\mu Q_{vol}} \qquad \text{with} \qquad \Delta P_{clean} = a_1 \mu Q_{vol} + a_2 \rho Q_{vol}^{\,2}$$

As discussed above, at the end of the basic regeneration period, the system is maintained in regeneration for an additional period. During this additional period, the averaged $\Delta a_1$ is calculated. This calculated value can then be added to a1 to compensate for ash accumulation.

b) Correction for the filter channels length reduction

The accumulation of ash leads to a reduction of the effective filtration channels length. Indeed, it appears that the ash accumulated at the end of the channels leaves less length for soot to be stored. As a result, for the same soot mass, the soot cake thickness, and thus the pressure drop across the filter, is higher for a filter with ash accumulation than for a filter without ash accumulation.

Moreover, the maximum soot loading allowed (to avoid a too high backpressure and any damages on the filter during regeneration) is smaller. It is therefore necessary to estimate the effective channel length in order to be able to correct the measured pressure drop based soot mass estimation and the maximum soot loading threshold.

The effective filtration channel length reduction is estimated based on the filter mileage.

The calculated offset on a1 may be used to detect when the filter has been changed. When the filter is replaced, the calculated value of a1 is returned to its normal value (and no faults are detected on the system) and the filter mileage is reset and the effective channel length is set back to is nominal value. In this way, when the filter is replaced there is no need to set any flag in the ECU to indicate that the filter is new.

The pressure drop based soot mass estimation and the maximum soot loading are then corrected for the new length.

For the ash learning algorithm, two modifications have been applied.

First, the conditions used to determine whether or not to suspend the algorithm processing are updated. There are two conditions to be met to enable algorithm processing:-

1. The ash learning algorithm has to be executed during stable conditions. Transients are prohibited to ensure a more accurate coefficient calculation.

2. The inputs parameters have not to be disturbed by external influences.

The exhaust gas flow rate must be not too high and not too low. First, a too low exhaust gas flow rate increases the calculation inaccuracy. Secondly, the calculated pressure drop for a filter free of soot depends on two fixed parameters which are determined during the calibration process. The first parameter (called A1) is proportional to the gas flow rate. The second parameter (called A2) is proportional to the squared flow rate. As there is variations among different filters, the A1 and A2 corresponded to the fitted filter can be different. The variation of A1 is determined by the ash learning algorithm. The variation of A2 is not determined. Therefore if the exhaust gas flow rate is too high, the influence of the A2 variation will be too high. Thirdly, setting a minimum and maximum value permits the determination of a flow rate range where the regeneration process remains efficient.

The gradient of the pressure drop has to remain under a threshold avoiding transients.

The vehicle has to be at a minimum speed. On the one hand, the sensor acquisition may be temperature sensitive. A minimum vehicle speed allows the sensor to be cooled down. On the other hand, a minimum vehicle speed guarantees that the learning algorithm will not occur during city driving where transients are numerous.

The three conditions described above have to be true during a predetermined amount of time to enable the algorithm to proceed.

Secondly, the regeneration process is monitored during the ash learning algorithm. As previously, the average DOC outlet temperature too high percentage and too low percentage are checked. The exhaust gas flow rate is not included as it is used for suspending the algorithm. Additionally to these parameters, the soot mass should remain low and no fault having an impact on the algorithm must be set (temperature, sensor...).

At the end of the algorithm (time basis), if the conditions above are met, the determined coefficient is stored. Otherwise, the calculated coefficient is rejected and the process will be launched again at the end of the next regeneration.

## Claims

1. A process for regenerating a particulate filter in an exhaust system of a compression ignition internal combustion engine, the process comprising the steps of initiating a regeneration process by adjusting engine operating parameters to increase the temperature of the particulate filter to a regeneration temperature, carrying out a regeneration process for a first time period to burn off soot collected in the filter, determining whether or not the regeneration process proceeded under favourable filter regeneration conditions during said first time period, wherein the determination of whether or not the regeneration process proceeded under favourable conditions during the first period is based upon the determination of the exhaust gas temperature and/or the exhaust gas flow rate during the respective time period and the comparison of said determined values with predetermined values indicative of favourable regeneration conditions, and extending only the filter regeneration for a further time period if it is determined that the regeneration process proceeded under favourable filter regeneration conditions during said first time period to make sure that the filter is really free of soot, and subsequently performing an ash learning algorithm to determine an ash related coefficient only if it is determined that the regeneration process proceeded under the favourable filter regeneration conditions during said further time period, wherein the determination of whether or not the regeneration process proceeded under favourable conditions during the further time period is based upon the determination of the exhaust gas temperature and/or the exhaust gas flow rate during the respective time period and the comparison of said determined values with predetermined values indicative of favourable regeneration conditions.

2. A process as claimed in claim 1, wherein the process of determination of whether or not the regeneration process proceeded under favourable conditions during the first time period comprises at least one of:-

   i) measuring the exhaust gas temperature and the exhaust gas flow rate over the respective regeneration period, calculating the mean exhaust gas temperature over said period and evaluating whether such calculated mean temperature exceeds a predetermined minimum temperature required for efficient soot combustion;
   ii) determining the mean exhaust gas flow rate over the respective regeneration period and evaluating whether such calculated mean flow rate exceeds a predetermined minimum required for homogeneous soot combustion;
   iii) determining the percentage of time over the respective regeneration period the exhaust gas temperature exceeds a predetermined maximum level indicative of non-homogenous soot combustion and comparing said calculated percentage with a predetermined maximum value;
   iv) determining the percentage of time over the respective regeneration period the exhaust gas temperature falls below a predetermined minimum level indicative of inefficient soot combustion and comparing said calculated percentage with a predetermined maximum value.

3. A process as claimed in claim 2, wherein the exhaust gas temperature is measured at the inlet of the particulate filter.

4. A process as claimed in claim 1, wherein the process of determination of whether or not the regeneration process proceeded under favourable conditions during the second time period and thus whether or not an ash learning algorithm can take place may comprise at least one of:-

   i) determining the exhaust gas flow rate and evaluating whether such flow rate falls within predetermined limits outside of which the ash learning algorithm lacks accuracy;
   ii) determining the pressure drop over the filter during the second regeneration period and evaluating whether such pressure drop exceeds a predetermined limit above which transients are known to occur;

iii) evaluating whether the vehicle speed falls below a predetermined minimum below which transients are more likely to occur.

5. A process as claimed in any preceding claim, wherein the regeneration process comprises the further step of recording the exhaust gas temperature during said ash learning algorithm, and updating the ash related coefficient with the value calculated by the ash learning algorithm only when the percentage of time over the period of the ash learning algorithm for which the exhaust gas temperature exceeds a predetermined maximum level and/or is below a predetermined minimum level falls below a predetermined maximum value.

6. A process as claimed in any preceding claim, wherein, during said ash learning algorithm, said ash related coefficient $\Delta a_1$ is calculated by the equation:-

$$\Delta a_1 = \frac{\Delta P - \Delta P_{clean}}{\mu Q_{vol}} \qquad \text{with} \qquad \Delta P_{clean} = a_1 \mu Q_{vol} + a_2 \rho Q_{vol}^2$$

7. A process as claimed in claim 6, wherein, during the period of the ash learning algorithm, the averaged $\Delta a_1$ is calculated and the calculated value is added to a1 to compensate for ash accumulation.

**Patentansprüche**

1. Prozess zur Regeneration eines Partikelfilters in einer Abgasanlage einer Selbstzündungs-Verbrennungskraftmaschine, wobei der Prozess die folgenden Schritte umfasst: Einleiten eines Regenerationsprozesses durch Einstellen von Motorbetriebsparametern zur Erhöhung der Temperatur des Partikelfilters auf eine Regenerationstemperatur, Durchführen eines Regenerationsprozesses für einen ersten Zeitabschnitt zum Wegbrennen von Ruß, der sich in dem Filter angesammelt hat, Ermitteln, ob der Regenerationsprozess während des genannten ersten Zeitabschnitts unter günstigen Filterregenerationsbedingungen ablief oder nicht, wobei die Ermittlung, ob der Regenerationsprozess während des genannten ersten Zeitabschnitts unter günstigen Bedingungen ablief oder nicht, auf der Ermittlung der Abgastemperatur und/oder des Abgasdurchflusses während des jeweiligen Zeitabschnitts und dem Vergleich der genannten ermittelten Werte mit vorbestimmten Werten, die günstige Regenerationsbedingungen anzeigen, basiert, und Verlängern der Filterregeneration nur dann um einen weiteren Zeitabschnitt, wenn ermittelt wird, dass der Regenerationsprozess während des genannten ersten Zeitabschnitts unter günstigen Filterregenerationsbedingungen ablief, um sicherzustellen, dass der Filter wirklich rußfrei ist, und anschließend nur dann Durchführen eines Asche-Lernlogarithmus zum Ermitteln eines aschebezogenen Koeffizienten, wenn ermittelt wird, dass der Regenerationsprozess während des genannten weiteren Zeitabschnitts unter den günstigen Filterregenerationsbedingungen ablief, wobei die Ermittlung, ob der Regenerationsprozess während des weiteren Zeitabschnitts unter günstigen Bedingungen ablief oder nicht, auf der Ermittlung der Abgastemperatur und/oder des Abgasdurchflusses während des jeweiligen Zeitabschnitts und dem Vergleich der genannten ermittelten Werte mit vorbestimmten Werten, die günstige Regenerationsbedingungen anzeigen, basiert.

2. Prozess nach Anspruch 1, bei dem der Prozess des Ermittelns, ob der Regenerationsprozess während des ersten Zeitabschnitts unter günstigen Bedingungen ablief oder nicht, wenigstens eines der Folgenden umfasst:

i) Messen der Abgastemperatur und des Abgasdurchflusses über den jeweiligen Regenerationszeitabschnitt, Berechnen der mittleren Abgastemperatur über den genannten Zeitabschnitt und Evaluieren, ob die so berechnete mittlere Temperatur eine vorbestimmte Mindesttemperatur, die für eine effiziente Rußverbrennung erforderlich ist, übersteigt,
ii) Ermitteln des mittleren Abgasdurchflusses über den jeweiligen Regenerationszeitabschnitt und Evaluieren, ob der so berechnete mittlere Durchfluss einen vorbestimmten Mindestwert, der für eine homogene Rußverbrennung erforderlich ist, übersteigt,
iii) Ermitteln des prozentualen Zeitanteils über den jeweiligen Regenerationszeitabschnitt, während dessen die Abgastemperatur ein vorbestimmtes maximales Niveau, das eine nichthomogene Rußverbrennung anzeigt, übersteigt, und Vergleichen des genannten berechneten prozentualen Anteils mit einem vorbestimmten Höchstwert,

iv) Ermitteln des prozentualen Zeitanteils über den jeweiligen Regenerationszeitabschnitt, während dessen die Abgastemperatur unter ein vorbestimmtes Mindestniveau fällt, das eine ineffiziente Rußverbrennung anzeigt, und Vergleichen des genannten berechneten prozentualen Anteils mit einem vorbestimmten Höchstwert.

3. Prozess nach Anspruch 2, bei dem die Abgastemperatur am Einlass des Partikelfilters gemessen wird.

4. Prozess nach Anspruch 1, wobei der Prozess des Ermittelns, ob der Regenerationsprozess während des zweiten Zeitabschnitts unter günstigen Bedingungen ablief oder nicht, und somit, ob ein Asche-Lernalgorithmus stattfinden kann oder nicht, wenigstens eines der Folgenden umfassen kann:

i) Ermitteln des Abgasdurchflusses und Evaluieren, ob ein solcher Durchfluss in vorbestimmte Grenzen fällt, außerhalb derer es dem Asche-Lernalgorithmus an Genauigkeit mangelt,
ii) Ermitteln des Druckgefälles an dem Filter während des zweiten Regenerationszeitabschnitts und Evaluieren, ob ein solches Druckgefälle eine vorbestimmte Grenze übersteigt, oberhalb derer bekanntermaßen vorübergehende Fehler stattfinden,
iii) Evaluieren, ob die Fahrzeuggeschwindigkeit unter einen vorbestimmten Mindestwert abfällt, unterhalb dessen vorübergehende Fehler wahrscheinlicher sind.

5. Prozess nach einem der vorhergehenden Ansprüche, bei dem der Regenerationsprozess den folgenden weiteren Schritt umfasst: Aufzeichnen der Abgastemperatur während des genannten Asche-Lernalgorithmus und Aktualisieren des aschebezogenen Koeffizienten durch den mit dem Asche-Lernalgorithmus berechneten Wert nur dann, wenn der prozentuale Zeitanteil über den Zeitabschnitt des Asche-Lernalgorithmus, während dessen die Abgastemperatur ein vorbestimmtes maximales Niveau übersteigt und/oder unter einem vorbestimmten Mindestniveau liegt, unter einen vorbestimmten Höchstwert abfällt.

6. Prozess nach einem der vorhergehenden Ansprüche, bei dem während des genannten Asche-Lernalgorithmus der genannte aschebezogene Koeffizient $\Delta a_1$ mit der folgenden Gleichung berechnet wird:

$$\Delta a_1 = \frac{\Delta P - \Delta P_{clean}}{\mu Q_{vol}} \qquad \texttt{wobei} \qquad \Delta P_{clean} = a_1 \mu Q_{vol} + a_2 \rho Q_{vol}{}^2$$

7. Prozess nach Anspruch 6, bei dem während des Zeitabschnitts des Asche-Lernalgorithmus das gemittelte $\Delta a_1$ berechnet wird und der berechnete Wert als Ausgleich für eine Ascheansammlung zu einer 1 addiert wird.

**Revendications**

1. Procédé pour régénérer un filtre à particules dans un système d'échappement d'un moteur à combustion interne à allumage par compression, le procédé comprenant les étapes consistant à démarrer un processus de régénération en ajustant les paramètres de fonctionnement du moteur afin d'augmenter la température du filtre à particules à une température de régénération, à effectuer un processus de régénération pendant une première période temporelle pour brûler les suies recueillies dans le filtre, à déterminer si le processus de régénération s'est déroulé ou non sous des conditions de régénération favorables pour le filtre pendant ladite première période temporelle, dans lequel la détermination quant à savoir si le processus de régénération s'est déroulé ou non sous des conditions favorables pendant la première période est basée sur la détermination de la température des gaz d'échappement et/ou sur le débit des gaz d'échappement pendant la période temporelle respective et la comparaison desdites valeurs déterminées avec des valeurs prédéterminées indicatives de conditions de régénération favorables, et à prolonger uniquement la régénération du filtre pendant une période temporelle supplémentaire si l'on détermine que le processus de régénération s'est déroulé sous des conditions de régénération favorables pour le filtre pendant ladite première période temporelle pour s'assurer que le filtre est réellement dépourvu de suies, et à exécuter ensuite un algorithme d'apprentissage de cendres pour déterminer un coefficient en relation avec les cendres uniquement si l'on détermine que le processus de régénération s'est déroulé sous les conditions de régénération favorables pour le filtre pendant ladite période temporelle supplémentaire, dans lequel la détermination quant à savoir si le processus de régénération s'est déroulé ou non sous des conditions favorables pendant la période temporelle supplémentaire est basée sur la détermination de la température des gaz d'échappement et/ou le débit des gaz d'échappement pendant la période temporelle respective et la comparaison desdites valeurs déterminées avec des valeurs prédéterminées indicatives de conditions de régénération favorables.

2. Procédé selon la revendication 1, dans lequel le processus de détermination quant à savoir si le processus de régénération s'est déroulé ou non sous des conditions favorables pendant la première période temporelle comprend au moins une des opérations suivantes :

i) mesure de la température des gaz d'échappement et du débit des gaz d'échappement pendant la période de régénération respective, calcul de la température moyenne des gaz d'échappement sur ladite période et évaluation quant à savoir si cette température moyenne calculée dépasse une température minimum prédéterminée exigée pour une combustion efficace des suies ;
ii) détermination du débit moyen des gaz d'échappement sur la période de régénération respective et évaluation quant à savoir si ce débit moyen calculé dépasse un minimum prédéterminé exigé pour une combustion homogène des suies ;
iii) détermination du pourcentage de temps sur la période de régénération respective où la température des gaz d'échappement dépasse un niveau maximum prédéterminé indicatif d'un manque d'homogénéité de la combustion des suies et comparaison dudit pourcentage calculé avec une valeur maximum prédéterminée ;
iv) détermination du pourcentage de temps sur la période de régénération respective où la température des gaz d'échappement tombe au-dessous d'un niveau minimum prédéterminé indicatif d'une combustion inefficace des suies et comparaison dudit pourcentage calculé avec une valeur maximum prédéterminée.

3. Procédé selon la revendication 2, dans lequel la température des gaz d'échappement est mesurée à l'entrée du filtre à particules.

4. Procédé selon la revendication 1, dans lequel le procédé de détermination quant à savoir si le processus de régénération s'est déroulé ou non sous des conditions favorables pendant la seconde période temporelle et donc si un algorithme d'apprentissage de cendres peut ou non se produire peut comprendre l'une au moins des opérations suivantes :

i) détermination du débit des gaz d'échappement et évaluation quant à savoir si ce débit tombe dans des limites prédéterminées à l'extérieur desquelles l'algorithme d'apprentissage de cendres manque de précision ;
ii) détermination de la chute de pression à travers le filtre pendant la seconde période de régénération et évaluation quant à savoir si cette chute de pression dépasse une limite prédéterminée au-dessus de laquelle il est connu que des phénomènes transitoires se produisent ;
iii) évaluation quant à savoir si la vitesse du véhicule tombe au-dessous d'un minimum prédéterminé au-dessous duquel des phénomènes transitoires se produiront plus vraisemblablement.

5. Procédé selon l'une quelconque des revendications précédentes, dans lequel le processus de régénération comprend l'opération suivante consistant à enregistrer la température des gaz d'échappement pendant ledit algorithme d'apprentissage de cendres, et à mettre à jour le coefficient en relation avec les cendres avec la valeur calculée par l'algorithme d'apprentissage de cendres uniquement quand le pourcentage de temps, sur la période de l'algorithme d'apprentissage de cendres pour lequel la température des gaz d'échappement dépasse un niveau maximum prédéterminé et/ou tombe au-dessous d'un niveau minimum prédéterminé, tombe au-dessous d'une valeur maximum prédéterminée.

6. Procédé selon l'une quelconque des revendications précédentes, dans lequel, pendant ledit algorithme d'apprentissage de cendres, ledit coefficient en relation avec les cendres $\Delta s_1$ est calculé par l'équation :

$$\Delta s_1 = (\Delta P - \Delta P_{clean})/\mu Q_{vol}, \text{ avec } \Delta P_{clean} = a_1\ \mu Q_{vol} + a_2\ \rho Q_{vol}{}^2$$

7. Procédé selon la revendication 6, dans lequel, pendant la période de l'algorithme d'apprentissage de cendres, on calcule la valeur moyenne de $\Delta s_1$ et la valeur calculée est ajoutée à $a_1$ pour compenser l'accumulation des cendres.

**Fig 1**

**EP 1 762 718 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1605143 A